(19) **Europäisches Patentamt**

**European Patent Office**

**Office européen des brevets**

(11) Veröffentlichungsnummer: **0 332 726 B1**

(12) **EUROPÄISCHE PATENTSCHRIFT**

(45) Veröffentlichungstag der Patentschrift: **08.01.92**

(51) Int. Cl.⁵: **A01D 45/06**

(21) Anmeldenummer: **88104132.1**

(22) Anmeldetag: **16.03.88**

(54) **Selbstfahrende Flachserntemaschine.**

(43) Veröffentlichungstag der Anmeldung:
**20.09.89 Patentblatt 89/38**

(45) Bekanntmachung des Hinweises auf die
Patenterteilung:
**08.01.92 Patentblatt 92/02**

(84) Benannte Vertragsstaaten:
**AT BE DE ES FR GB IT NL**

(56) Entgegenhaltungen:
**BE-A- 424 702**
**DE-C- 3 639 022**

(73) Patentinhaber: **Bretthauer, Jens**
**Eckernförder Strasse 235f**
**W-2300 Kiel 1(DE)**

Patentinhaber: **Heger, Egon**
**Salzburger Strasse 137**
**W-2300 Kiel 14(DE)**

(72) Erfinder: **Bretthauer, Jens**
**Eckernförder Strasse 235f**
**W-2300 Kiel 1(DE)**
Erfinder: **Heger, Egon**
**Salzburger Strasse 137**
**W-2300 Kiel 14(DE)**

(74) Vertreter: **Tönnies, Jan G., Dipl.-Ing.**
**Niemannsweg 133**
**W-2300 Kiel 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

# Beschreibung

Die Erfindung betrifft eine Flachserntemaschine nach dem Oberbegriff des Hauptanspruchs, wie sie aus der BE-A-424702 vorbekannt ist.

Flachs wird in gemäßigten Klimaten zur Gewinnung von Leinöl aus den ölhaltigen Samen und zur Gewinnung der Fasern aus dem Bastteil des Stengels landwirtschaftlich genutzt. In der Bundesrepublik Deutschland wurde jedoch Mitte der 50er Jahre der Flachsanbau eingestellt, da Flachs wegen der aufwendigen und teuren Verarbeitungstechnik gegenüber den preiswerteren synthetischen Fasern und der Baumwolle nicht mehr wettbewerbsfähig war.

Die Flachsfasern werden bisher dadurch gewonnen, daß Flachspflanzen gerauft, auf dem Feld wieder abgelegt, dort geröstet, also angerottet, und die brüchig gewordenen Holzbestandteile nach Wiederaufnehmen der Flachspflanzen sodann in einer Fabrik durch die Walzen einer Brechmaschine und das Schlagwerk einer Schwingturbine von dem Bast gelöst werden.

Eine aus der DD-A-37 923 vorbekannte selbstfahrende Flachserntemaschine dient dazu, die zuvor gerauften Flachspflanzen aus dem Schwad aufzunehmen, den Leinsamen zu gewinnen und das ausgedroschene Flachsstroh sodann zu binden und wieder abzulegen.

Einerseits zum Raufen der Flachspflanzen und andererseits zum Brechen des Flachsstrohs zur Gewinnung der Fasern weitere Maschinen erforderlich. Der Einsatz der vorbekannten Maschine ist daher unwirtschaftlich.

Der Erfindung liegt die Aufgabe zugrunde, eine Vorrichtung der eingangsgenannten Art zu schaffen, die es erlaubt, Flachsfasern zu gegenüber Baumwolle und synthetischen Fasern marktfähigen Preisen zu erzeugen.

Erfindungsgemäß wird diese Aufgabe bei einer Flachserntemaschine der eingangsgenannten Art durch die im kennzeichnenden Teil des Hauptanspruchs angegebenen Merkmale gelöst.

Die Unteransprüche geben vorteilhafte Ausgestaltungen dieser Vorrichtung an.

Die Erfindung wird im folgenden anhand einer Zeichnung erläutert. Dabei zeigt:

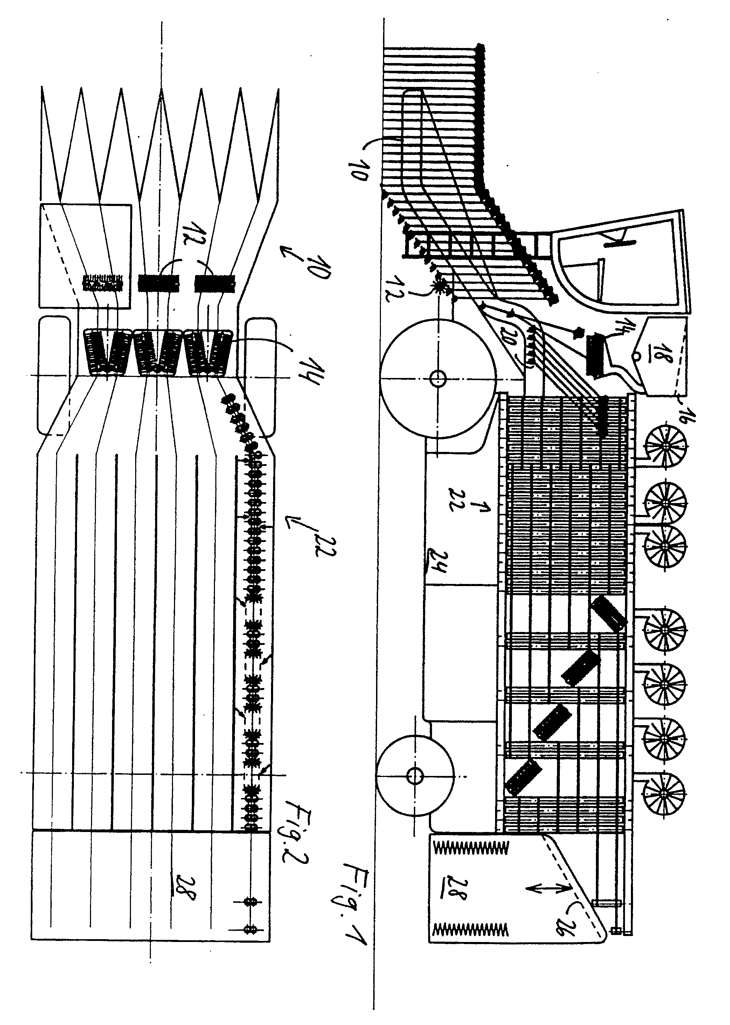

Fig. 1 eine schematische Seitenansicht auf eine schine;

Fig. 2 eine schematische Draufsicht auf die in Fig. 1 dargestellte selbstfahrende Flachserntemaschine,

Fig. 3 eine Darstellung eines Brechwalzenpaares,

Fig. 4 eine Fig. 3 entsprechende Schnittdarstellung der Brechwalzen, und

Fig. 5 eine schematische Darstellung, die das Durchführen der Flachspflanzen durch die Brechwalzenpaare verdeutlicht.

Die Vorrichtung besteht aus einer selbstfahrenden Arbeitsmaschine, die mit einer Aufnahmeeinrichtung 10, einer Reinigungseinrichtung 12, einer Entkapselungseinrichtung 14, einer Drescheinrichtung 16, einem Samentank 18, einer Übergabeeinrichtung 20, einer Brecheinrichtung 22, einem Auslaß 24, einer Faserpresse 26 und einem Fasertank 28 versehen ist.

Die Aufnahmeeinrichtung 10 kann mit verschiedenen Köpfen versehen werden, nämlich einem ersten Kopf, der zum Raufen der stehenden, ggf. chemisch vorbehandelten, insbesondere einige Zeit vor der Ernte abgetöteten Flachspflanzen ausgebildet ist, einem zweiten Kopf, der zum Aufnehmen der in einem vorangehenden Arbeitsgang ausgerauften, ggf. entkapselten und in Parallellage abgelegten, taugerösteten Flachspflanzen eingerichtet ist, und einem dritten Kopf, der zum Aufnehmen der zuvor nach konventionellen Mähdrescherdurchsatz wirrliegenden Ölleinstrohs eingerichtet ist. Die Aufnahmeeinrichtung 10 fördert die aufgenommenen Flachspflanzen zur Reinigungseinrichtung 12, wobei die bei Ausraufen der Flachspflanzen an den Wurzelenden anhaftende Erde mittels Bürsten entfernt wird. Gleichzeitig könnnen die Flachspflanzen in einer Entkapselungseinrichtung 14 entkapselt und die Samen in einer Drescheinrichtung 16 gewonnen werden. Die gewonnenen Samen werden in einen Samentank 18 geführt, das Flachsstroh dagegen zu einer Übergabeeinrichtung, die das Flachsstroh in geeigneter Ausrichtung der Brecheinrichtung 22 übergibt. Diese Brecheinrichtung 22 besteht aus einer Vielzahl von Walzen, wobei aufeinanderfolgend angeordnete Walzen unterschiedliche Umdrehungsgeschwindigkeit haben, so daß alternierend ein positiver und negativer Verzug besteht. In dieser Brecheinrichtung wird das Flachsstroh gebrochen, was zu einer weitgehenden Trennung von Holz- und Faserteilen des Flachsstrohs führt. In den Bereichen, in dem das Flachsstroh gestaucht wird, greift ein Gebläse an, durch das die Holzteile ausgeblasen werden. Diese Holzteile werden durch einen Auslaß 24 ausgestoßen, wobei dieser Auslaß so eingerichtet ist, daß diese Holzteile wahlweise auf dem Boden abgelegt oder aber in einen neben- oder nachlaufenden Wagen überladen werden können.

Die nach Passieren der Brecheinrichtung 22 gewonnenen Flachsfasern werden zu einer Flachspresse 26 geführt, in dieser verdichtet und sodann von einem Fasertank 28 aufgenommen.

Bei entsprechender chemischer Vorbehandlung der Flachspflanzen, insbesondere der Abtötung durch Herbizide einige Zeit vor der Ernte, kann die Vorrichtung dazu verwendet werden, in einem Arbeitsgang die Flachspflanzen zu raufen, zu reinigen, zu entkapseln, aus dem Kapseln die Samen auszudreschen, das Flachsstroh zu brechen und Flachsfasern zu gewinnen. Anders als bei den bisher üblichen Verfahren wird also eine Faser direkt in einem Arbeitsgang bei Verwendung lediglich einer Maschine auf dem Feld gewonnen. Es ist offensichtlich, daß ein solches Vorgehen weitaus wirtschaftlicher ist als die bisher üblichen Verfahren zur Gewinnung von Flachsfasern. Allerdings muß mit einer Einschränkung der Qualität der so gewonnenen Flachsfasern gerechnet werden.

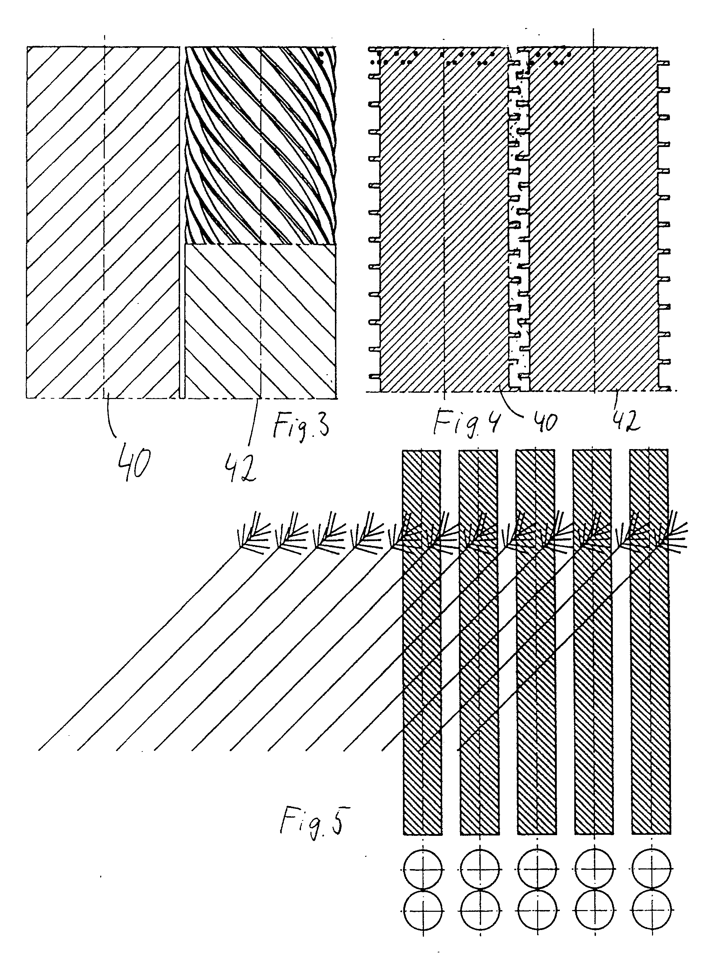

Die Fig. 3 bis 5 verdeutlichen die Ausbildung der Brecheinrichtung, wie sie sich für den Einsatz in einer selbstfahrenden Flachserntemaschine besonders geeignet erwiesen hat. Dabei besteht die Brecheinrichtung 22 aus einer Vielzahl von Paaren von Brechwalzen 40, 42, die mit einer schraubenlinienförmigen Profilierung versehen sind. Zwei jeweils Paare bildende Brechwalzen 40, 42 laufen dabei gegensinnig, so daß die geernteten Flachspflanzen gegen die Fahrtrichtung durch die Erntemaschine transportiert werden. Zeichnerisch nicht dargestellt sind Gurte, zwischen denen die Flachspflanzen zur Förderung zwischen den Brechwalzenpaaren befördert werden können.

Die Schraubenprofilierung der Walzen 40, 42 eines Paares ist dabei gegensinnig, die Profilierung der einen Walzen ist also rechtsdrehend, die der zugehörigen anderen Walzen linksdrehend.

Fig. 5 verdeutlicht, daß die Flachpflanzen im wesentlichen rechtwinklig zu der Steigung der Schraubenprofilierung durch die Paare von Brechwalzen 40, 42 hindurch laufen. Die Flachspflanzen werden also von jeder Walze nur in einem relativ kleinen Bereich erfaßt und dort gebrochen, wobei der Ort, an dem die Brechung erfolgt, von oben nach unten über die Flachspflanze wandert. Eine Dehnung der Flachspflanzen während des Brechvorgangs, die zu einem unerwünschten Zerreißen der Flachsfasern führen könnte, wird dadurch weitestgehend vermieden. Die relativ geringe Dehnung, die sich daraus ergibt, daß die Flachspflanzen gleichzeitig von mehreren Brechwalzenpaaren an mit Abstand voneinander angeordneten Orten von verschiedenen Walzen erfaßt und gebrochen werden, führt dagegen nicht zu einer erheblichen Reduzierung der Länge der Flachsfasern.

Um zu vermeiden, daß sich der horizontale Versatz der Flachspflanzen in vertikaler Richtung addiert, werden die Brechwalzen so angeordnet, daß sich abwechselnd ein Versatz nach oben und nach unten ergibt.

Die senkrechte Anordnung und die vorgeschlagene Ausbildung der Brechwalzen mit einer schraubenlinienförmigen Profilierung macht eine Durchsatzleistung möglich, bei der das Brechen der Flachsfasern bereits auf dem Feld unmittelbar nach dem Aufnehmen der Flachsplanzen erfolgen kann. Es wird somit wieder möglich, Flachspflanzen wirtschaftlich zu ernten und zu verarbeiten.

## Patentansprüche

1. Flachserntemaschine, mit einer Aufnahmeeinrichtung (10) zur Aufnahme der Flachspflanzen, einer Drescheinrichtung (16) zum Trennen von Leinsamen und Kapselstreu und einer Übergabeeinrichtung 20) zur Übergabe des Flachsstrohs zu nachfolgenden Einrichtungen,

   - mit einer Entkapselungseinrichtung (14) zum Trennen der Kapseln von dem Flachsstroh,
   - einem Samentank (18) zur Aufnahme der gedroschenen Leinsamen,
   - einer Brecheinrichtung (22) zur weitgehenden Trennung von Holz- und Faserteilen des Flachsstrohs,
   - und einem Auslaß (24) zum Auslassen der abgetrennten Holzteile des Flachsstrohs,

   dadurch gekennzeichnet, daß die Maschine mit

   - einer Faserpresse (26) zum Verdichten der gewonnenen Flachsfasern, und
   - einem Fasertank (28) zur Aufnahme der verdichteten Fasern versehen,
   - und als selbstfahrende Erntemaschine ausgebildet ist.

2. Selbstfahrende Flachserntemaschine nach Anspruch 1, gekennzeichnet durch eine Reinigungseinrichtung (12) zum Entfernen der im Wurzelbereich der Flachspflanzen anhaftenden Erde.

3. Selbstfahrende Flachserntemaschine nach Anspruch 2, dadurch gekennzeichnet, daß die Reinigungseinrichtung (12) mit rotierenden Bürsten versehen ist.

4. Selbstfahrende Flachserntemaschine nach einem der vorangehenden Ansprüche, dadurch gekennzeichnet, daß die Aufnahmeeinrichtung (10) mit auswechselbaren Köpfen versehen ist, von denen einer zum Ausraufen der stehenden, ggf. chemisch vorbehandelten Flachspflanzen eingerichtet ist und ein weiterer zur Aufnahme der in einem vorangehenden Arbeitsgang gerauften und in Parallellage abgelegten, taugerösteten Flachspflanzen eingerichtet ist.

5. Selbstfahrende Flachserntemaschine nach einem der vorangehenden Ansprüche, dadurch gekennzeichnet, daß die Übergabeeinrichtung (20) zum Schräglegen der Flachspflanzen bzw. des Flachsstrohs eingerichtet ist.

6. Selbstfahrende Flachserntemaschine nach einem der vorangehenden Ansprüche, dadurch gekennzeichnet, daß die Brecheinrichtung (22) aus einer Vielzahl von Paaren von gegensinnig laufenden Brechwalzen (40, 42) bestehen, die mit einer schraubenlinienförmigen Profilierung versehen sind, wobei die Schraubenprofilierung der einen Walzen eines jeden der Paare rechtsdrehend und die Schraubenprofilierung der anderen Walze eines jedes der Paare linksdrehend ist.

7. Selbstfahrende Flachserntemaschine nach einem der vorangehenden Ansprüche, dadurch gekennzeichnet, daß die Brechwalzen (40, 42) senkrecht angeordnet sind.

8. Selbstfahrende Flachserntemaschine nach Anspruch 6 oder Anspruch 7, dadurch gekennzeichnet, daß die Flachspflanzen in einem Winkel von etwa 90° zur Steigung des Schraubenprofils durch die Brechwalze (40, 42) geführt werden.

9. Selbstfahrende Flachserntemaschine nach einem der Ansprüche 6 bis 8, gekennzeichnet durch eine alternierende Anordnung der Brechwalzen (40, 42) derart, daß der vertikale Versatz der Flachspflanzen bei dem Passieren durch die Brechwalzen (40, 42) ausgeglichen wird.

**Claims**

1. Flax harvester, with a pick-up (10) for picking up the flax plants, a thresher (16) for separating linseed capsule straw a transfer means (20) for transferring the flax straw to following means, with a capsule removing means (14) for separating the capsules from the flax straw, a seed tank (18) for receiving the threshed linseed, a stripping means (22) for the extensive separation of the flax straw xylem and an outlet (24) for discharging the separated flax straw xylem, characterized in that the harvester is provided with a fibre press (26) for compressing the flax fibres obtained and a fibre tank (28) for receiving the compressed fibres and is constructed as an automotive harvester.

2. Automatic flax harvester according to claim 1, characterized by a cleaning means (12) for cleaning the soil adhering to the root area of the flax plants.

3. Automotive flax harvester according to claim 2, characterized in that the cleaning means (12) is provided with rotating brushes.

4. Automotive flax harvester according to one of the preceding claims, characterized in that the pick-up (10) is provided with replaceable heads, one of which is set up for pulling the standing and optionally chemically pretreated flax plants and another is set up for receiving the dew retted flax plants pulled in a preceding operation and deposited in a parallel position.

5. Automotive flax harvester according to one of the preceding claims, characterized in that the transfer means (20) is set up for the sloping positioning of the flax plants or flax straw.

6. Automotive flax harvester according to one of the preceding claims, characterized in that the stripping means (22) comprises a plurality of pairs of contrarotating stripping rolls (40, 42), which are provided with a helical profiling, the helical profiling of one roll of each of the pairs rotating clockwise and the helical profiling of the other roll of each of the pairs rotating counterclockwise.

7. Automotive flax harvester according to one of the preceding claims, characterized in that the stripping rolls (40, 42) are positioned vertically.

8. Automotive flax harvester according to claims 6 or 7, characterized in that the flax plants are guided by the stripping roll (40, 42) at an angle of approximately 90° to the pitch of the helical profile.

9. Automotive flax harvester according to one of the claims 6 to 8, characterized by an alternating arrangement of the stripping rolls (40, 42) in such a way that the vertical displacement of the flax plants on passing through the stripping rolls (40, 42) is compensated.

**Revendications**

1. Une récolteuse de lin avec

   - un dispositif de réception (10) pour recevoir les plantes de lin
   - un dispositif à battre le lin (16) pour séparer les graines de lin et la litière de capsule
   - un dispositif de remise (20) pour remettre la paille de lin à des dispositifs suivants

caractérisée par le fait que la machine est munie

- d' un dispositif de décapsulage (14) pour séparer les capsules et la paille de lin,
- d' un réservoir de graines (18) pour recevoir les graines de lin battues,
- d' un dispositif à broyer le lin (22) pour séparer largement les particules de fibres et les particules de bois de la paille de lin,
- d' un échappement (24) pour faire sortir les particules de bois séparées de la paille de lin,
- d' une presse à fibres (26) pour comprimer les fibres de lin extraites,
- d' un réservoir de fibres (28) pour recevoir les fibres comprimées,
- et caractérisée par le fait que la récolteuse est automotrice.

2. Récolteuse de lin automotrice d' après la revendication numéro 1, caractérisée par un dispositif de nettoyage (12) pour enlever la terre adhérante dans la région de la racine des plantes de lin.

3. Récolteuse de lin automotrice d' après la revendication numéro 2, caractérisée par le fait que le dispositif de nettoyage (12) est muni de brosses rotatives.

4. Récolteuse de lin automotrice d' après une des revendications préalables, caractérisée par le fait que le dispositif de réception (10) est muni de têtes échangeables, dont une est disposée à arracher les plantes de lin verticales qui - le cas échéant - peuvent être traitées chimiquement, et dont une autre est disposée à recevoir les plantes de lin arrachées et rangées parallèlement dans une opération précédante et rouies par la rosée.

5. Récolteuse de lin automotrice d' après une des revendications préalables, caractérisée par le fait que le dispositif de remise (20) est disposé à mettre dans une position oblique les plantes de lin ou bien la paille de lin.

6. Récolteuse de lin automotrice d' après une des revendications préalables, caractérisée par le fait que le dispositif à broyer le lin (22) se compose d' une multiplicité de paires de cylindres broyeurs (40, 42) agissants à contre-sens qui sont munis d' un profilé en hélice et que le profilé d' hélice de l' un des cylindres de chaque paire est dextrogyre et que le profilé de l' autre cylindre de chaque paire est lévogyre.

7. Récolteuse de lin automotrice d' après une des revendications préalables, caractérisée par le fait que les cylindres broyeurs (40, 42) sont disposés de façon perpendiculaire.

8. Récolteuse de lin automotrice d' après la revendication numéro 6 ou la revendication numéro 7 caractérisée par le fait que les plantes de lin sont menées dans un angle d' à peu près 90° au pas du profilé d' hélice.

9. Récolteuse de lin automotrice d' après une des revendications numéro 6 à 8, caractérisée par une disposition alternante des cylindres broyeurs (40, 42), de façon que la dislocation verticale des plantes de lin est compensée pendant leur passage à travers les cylindres broyeurs (40, 42).

Fig. 2

Fig. 1

Fig.3

40          42

Fig.4   40        42

Fig.5